# EUROPÄISCHE PATENTANMELDUNG

(11) **EP 1 219 155 A1**
(43) Veröffentlichungstag der Anmeldung: **03.07.2002**
(21) Anmeldenummer: 01130410.2
(22) Anmeldetag: 20.12.2001
(51) Int. Cl.: A01C 17/00, A01C 15/12

(54) **Streuvorrichtung**

(30) Priorität: 21.12.2000 DE 20021596 U; 22.02.2001 DE 10108604
(71) Anmelder: Kalkwerk Hufgard GmbH, 63768 Hösbach-Rottenberg (DE)
(72) Erfinder: Hufgard, Alexander, 63773 Goldbach (DE); Englert, Georg, 63879 Weibersbrunn (DE); Blecher, Frank, 61191 Rosbach (DE)
(74) Vertreter: Wolf, Günter, Dipl.-Ing.

(57) **Zusammenfassung**

Die Erfindung betrifft eine Streuvorrichtung für die Ausbringung von fein- bis grobkörnigen Mineraldünger, bestehend aus einem auf einem fahrbaren Chassis (1') angeordneten, trogartigen Vorratsbehälter (1), dessen Boden aus einem mit Antrieb (3) versehenen Endlosförderer (2) gebildet ist, der die untere Begrenzung einer rückwandseitigen, mit Schieber regulierbare Öffnung des Vorratsbehälters (1) bildet und diese überragt, und unter dessen Ende (6) mindestens eine um eine vertikale Achse drehbare Streuscheibe (7) angeordnet ist.

Erfindungsgemäß ist zwischen dem Ende (6) des Endlosförderers (2) und der mindestens einem Streuscheibe (7) ein in Bezug auf den Vorratsbehälter (1) volumenkleinerer Zwischenbehälter (8) mit mindestens einer regulierbaren Auslaßöffnung in seinem Boden angeordnet. Der Zwischenbehälter (8) weist zuförderseitig eine Ausnehmung (12) für den überlappenden Eingriff des Endes (6) des Endlosförderers (2) auf, und über der Ausnehmung (12) ist der Zwischenbehälter (8) nach oben mit einer Verlängerung (13) versehen. Mindestens die beiden Flankenbereiche des Endlosförderers (2) sind im Übergangsbereich (5) vom Vorratsbehälter (1) zum Zwischenbehälter (8) mit Überlaufblenden versehen.

## Beschreibung

Die Erfindung betrifft eine Streuvorrichtung für die Ausbringung und Feinverteilung von rieselfähigem Mineraldünger, gemäß Oberbegriff des unabhängigen Patentanspruches 1.

Derartige Streuvorrichtungen sind hinlänglich bekannt und in Benutzung, so daß es diesbezüglich keines besonderen druckschriftlichen Nachweises bedarf. Der trogartige Vorratsbehälter kann dabei, wenn für eine Großflächenbestreuung vorgesehen, Volumengrößen bis zu 2 m³ und mehr haben. Das vom Endlosförderer, der in der Regel eine Breite in der Größenordnung von 0,7 m aufweist, in von der Schieberstellung einstellbarer Schichtdicke ausgeförderte Düngemittel fällt dabei auf in der Regel zwei darunter gegenläufig drehende Streuscheiben bzw. Streuteller und wird von diesen über den befahrenen Bodenstreifen verteilt. Sehr hochwertige, d.h., düngeintensiv wirkende Düngemittel müssen bezogen auf die Fläche mit relativ geringen Mengen ausgetragen und fein verteilt werden. Für einen solchen Austrag in geringen Menge sind Streuvorrichtungen der eingangs genannten Art auf Grund ihrer groben Schieberregelung praktisch nicht geeignet, weshalb man dafür andere, gewissermaßen diffizilere Streuvorrichtungen benutzt, die zum Einen einen Vorratstrichter mit wesentlich geringerem Aufnahmevolumen aufweisen und zum Anderen statt des Endlosförderers einen festen Boden mit ganz spezifisch konfigurierten, schieberregulierbaren Auslaßöffnungen, mit denen einerseits der Mengenaustrag und auch die Auftreffstellen des ausrieselnden Streugutes auf die auch hier darunter angeordneten Streuteller geregelt werden.

Diese Streuvorrichtungen, die gewissermaßen Feindosierer darstellen, sind für die Behandlung großer Flächen wegen ihres geringen Aufnahmevolumens nur bedingt geeignet und nachteilig, weil sie eine häufige Nachladung erfordern. Zu beachten ist beim Ganzen auch noch, daß es bei Großflächen häufig vorkommt, bestimmte Flächenbereiche einer insgesamt zu düngenden Großfläche mehr oder weniger stark zu düngen, welcher Forderung mit den eingangs erläuterten, mit Endlosförderern arbeitenden Großflächenstreuvorrichtungen mangels ihrer beschränkten Regelbarkeit und der ungezielten Übergabe des Streugutes auf die Streuteller nicht genügt werden kann.
Um das erwähnte, häufige Nachladen zu reduzieren, insbesondere aber um damit auch geringere Mengen austragen zu können, hat man die einleitend erwähnten trogartigen, großvolumigen Vorratsbehälter schon dahingehend umgestaltet, daß man am Auslaufende des Endlosförderers eine mit zwei Öffnungen versehene, stationäre Blende anordnet, die in ihrer Öffnungsgröße ebenfalls durch Höhenverstellung des Schiebers eingestellt werden können. Damit ist zwar eine etwas bessere Austragsmengenregelung möglich, eine feinere und entsprechend zu verlangende gleichmäßige Verteilung auf dem Boden ist damit aber auch nicht optimal erreichbar, eben weil hierbei die oben erwähnten, spezifisch konfigurierten Auslaßöffnungen nicht vorhanden sind, d.h., der pulverförmige oder granulierte Dünger fällt nach wie vor aus den beiden vertikal über dem Endlosförderer orientierten Öffnungen in voller Öffnungsbreite praktisch ungezielt auf die Streuteller.

Der Erfindung liegt die Aufgabe zugrunde, durch eine einfache mechanische Maßnahme die Versorgung des Zwischenbehälters mit streugut auf einfache Weise zu bewirken.

Ausgehend von einer Streuvorrichtung der eingangs genannten Art ist diese Aufgabe nach der Erfindung durch die im Kennzeichen des unabhängigen Patentanspruches 1 angeführten Merkmale gelöst.

Überraschenderweise hat sich gezeigt, daß ohne jeglichen sensibel reagierenden Fühler- und Steuerungsaufwand eine bezüglich der Versorgung des Zwischenbehälters sich selbstregelnde Streuvorrichtung geschaffen ist, die den bei permanent laufenden, also keiner Steuerung bedürfenden Endlosförderer sich zwangsläufig einstellenden Stau des Streugutes dahingehend ausnutzt, daß im Zwischenbehälter immer ausreichend Streugut vorhanden ist.
Wesentliche Voraussetzung dafür ist zum einen die Verlängerung des Zwischenbehälters nach oben über die Eingriffsstelle des Endlosförderes hinaus und zum anderen dessen Flankenverblendungen zwischen großem Vorratsbehälter und dem kleineren Zwischenbehälter.

Die erfindungsgemäße Verlängerung des Zwischenbehälters nach oben führt nämlich dazu, daß das permanent zugeförderte Streugut im Zwischenbehälter über das Einförderniveau solange ansteigt, bis vom Endlosförderer aufgrund des sich einstellenden Staus nichts mehr zugefördert werden kann. Die Flankenverblendungen sorgen dann dabei dafür, daß das weiter vom Endlosförderer ausgeförderte Streugut nicht einfach seitlich abfließt, sondern sich im Übergangsbereich ebenfalls aufstaut und dadurch trotz weiterlaufendem Endlosförderer kein Streugut mehr aus dem großen Vorratsbehälter ausgefördert wird, d.h., der Endlosförderer läuft bezgl. einer weiteren Förderung gewissermaßen leer, und die Weiterförderung stellt sich selbsttätig erst dann wieder ein, wenn sich aufgrund des Streugutaustrages aus dem Zwischenbehälter, der ja permanent während des Betriebes weiter erfolgt, der Stau im Zwischenbehälter soweit reduziert hat, daß der Endlosförderer wieder Streugut aus dem Bereich zwischen den Flankenblenden nachschieben kann.

Die Höhe der beidseitigen Flankenblenden muß dabei so bemessen sein, daß bei sich beschriebener Staubildung im Übergangsbereich das gestaute Streugut nicht über die oberen Endränder der Flankenblenden ablaufen kann.
Eine diesbezüglich vorteilhafte Ausführungsform besteht einfach darin, daß die beiden seitlichen Überlaufblenden die Seitenwände eines den Übergangsbereich zwischen Vorratsbehälter und Zwischenbehälter überdeckenden Tunnels bilden.
Abgesehen von dieser erfindungsgemäßen sensorlosen Selbstregelung der Versorgung des Zwischenbehälters steht natürlich nichts entgegen, den trichterförmigen Teil des Zwischenbehälters zusätzlich mit Füllstandssensoren auszustatten, was noch näher erläutert wird.

Die erfindungsgemäße Streuvorrichtung wird nachfolgend anhand der zeichnerischen Darstellung von Ausführungsbeispielen näher erläutert.
Es zeigt
- Fig.1: in Seitenansicht die fahrbare Streuvorrichtung in Form eines von einem Traktor ziehbaren Anhängers;
- Fig.2: die Streuvorrichtung gemäß Fig.1 von hinten her gesehen;
- Fig.3 A-C: schematisch in Rück-, Seiten- und Draufsicht eine Zwischenbehälter und Streuwerk gebildete Anbaueinheit und
- Fig.4: schematisch die Anordnung von Füllstandssensoren und deren Verschaltung.

Die Streuvorrichtung besteht nach wie vor aus einem auf einem fahrbaren Chassis 1' angeordneten, trogartigen Vorratsbehälter 1, dessen Boden aus einem mit Antrieb 3 versehenen Endlosförderer 2 gebildet ist, der die untere Begrenzung einer in der Rückwand 4 des Behälters 1 angeordneten, mit Schieber regulierbare Öffnung (nicht dargestellt, da bekannt) bildet und diese überragt. Unter dem Ende 6 des Endlosförderers 2 ist mindestens eine um eine vertikale Achse drehbare Streuscheibe 7 angeordnet. In der Regel sind, wie dargestellt, zwei solcher Streuscheiben 7 vorhanden.

Für eine solche Streuvorrichtung ist nun unter Verweis auf die dargestellten Ausführungsformen wesentlich, daß zwischen dem Ende 6 des Endlosförderers 2 und der mindestens einem Streuscheibe 7 ein in Bezug auf den Vorratsbehälter 1 volumenkleinerer Zwischenbehälter 8 mit mindestens einer regulierbaren Auslaßöffnung 9 in seinem Boden angeordnet ist. Ferner ist der Zwischenbehälter 8 zuförderseitig mit einer Ausnehmung 12 für den überlappenden Eingriff des Endes 6 des Endlosförderers 2 in den Zwischenbehälter 8 versehen. Über dieser Ausnehmung 12 ist der Zwischenbehälter nach oben durch eine Verlängerung 13 vergrößert, und schließlich sind mindestens die beiden Flankenbereiche 10 des Endlosförderers 2 im Übergang vom Vorratsbehälter 1 zum Zwischenbehälter 8 mit Überlaufblenden 11 versehen.

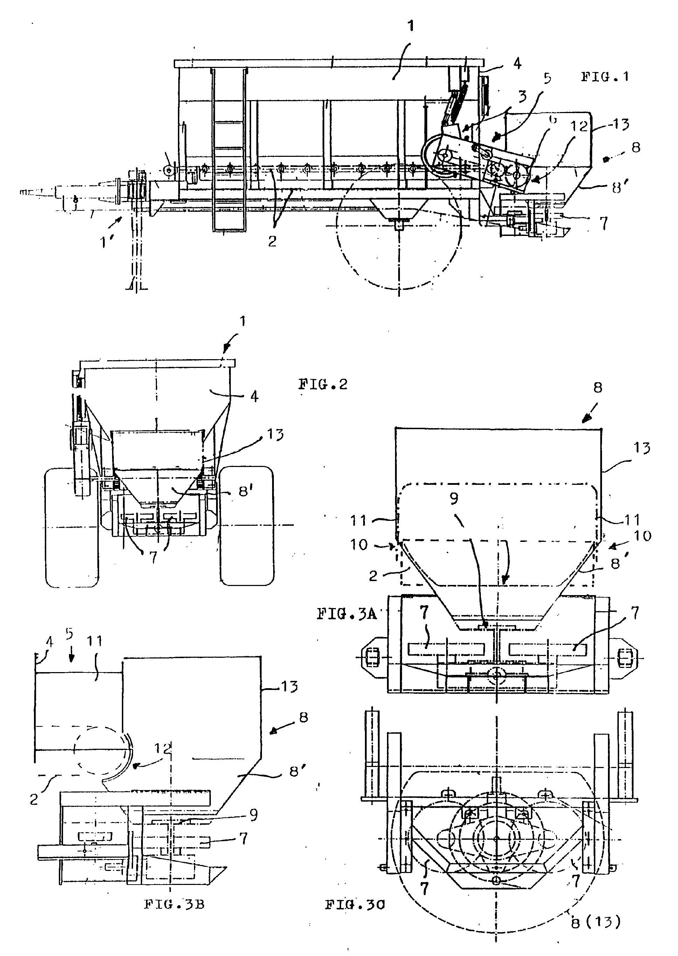

Wesentlich für den einleitend erläuterten, regulativen Stauvorgang ist dabei die Verlängerung 13 bzw. Vergrößerung des Zwischenbehälters 8 nach oben über das Zuförderniveau bzw. über das obere Ende des trichterförmigen Unterteiles 8' des Zwischenbehälters 8 hinaus, wobei darauf hingewiesen sei, daß die bisherigen "Feindosierer" bislang praktisch nur aus einem solchen trichterförmigen Behälter bestehen. Wesentlich sind ferner die beiden seitlich dem Endlosförderer 3 zugeordneten Überlaufblenden 11, die dafür sorgen, daß bei Rückstau vom Zwischenbehälter 8 aus das rückstauende Streugut nicht einfach seitlich vom ständig laufenden Endlosförderer abläuft.
Unter Verweis auf Fig.3A wird der Übergangsbereich 5 (siehe Fig.3B) zwischen der Rückwand 4 des Vorratsbehälters 1 und dem Zwischenbehälter 8 bevorzugt durch einen strichpunktiert in Fig.3A angedeuteten Tunnel 12 überdeckt bzw. verblendet, dessen

Seitenwände die Überlaufblenden 11 bilden. Ein solcher Tunnel 12 oder auch die beiden Überlaufblenden 11 werden einfach in geeigneter Weise mit der Rückwand 4 und dem Zwischenbehälter 8 verbunden, wofür erforderlichenfalls auch elastische Verbindungselemente vorgesehen werden können, um unterschiedlichen Schwingungen von Vorratsbehälter 1 und Zwischenbehälter 8 bei rauhem Fahrbetrieb Rechnung zu tragen.

Unabhängig von der selbsttätig stauregulierten Nachfüllung des Zwischenbehälters 8 ist die Einstellung des nicht dargestellten Schiebers zur Öffnung in der Rückwand 4 des Vorratsbehälters 1 vorzunehmen und auch der eigentlichen Auslaßöffnungen 9 im Boden des Zwischenbehälters 8, die an der gewünschten Austragsmenge pro Bodenfläche bzw. pro Hektar und an der Fahrgeschwindigkeit zu orientieren ist.

Was die ebenfalls mit einem Schieber feiner regulierbare Öffnung 9 im Boden des Trichters 8 betrifft, bedarf diese an sich keiner näheren Erläuterung, da diese, wie vorerwähnt, in ihrer spezifischen Querschnittskonfiguration bekannt ist, mit der und der Schieberstellung zum Einen die Ausfließmenge des Streugutes und zum Anderen der Auftreffbereich auf den beiden Streuscheiben 7 reguliert wird. Im Vergleich zur Grobdosierung am Ende des Endlosförderers 2 ist also durch die Nachschaltung des Zwischenbehälters 8 eine wesentlich feinere Mengendosierung nunmehr auch bei Großflächenstreuvorrichtungen möglich, die bislang allein aus dem Vorratsbehälter 1 mit Endlosförderer 2 und den Streuscheiben 7 bestehen.

Was die Zuordnung eines solchen Feindosierungszwischenbehälters zum wesentlich größeren Vorratsbehälter 1 betrifft, bestehen verschiedene Möglichkeiten, und zwar zum Einen dahingehend, daß die mindestens eine mit ihrem Antrieb ein sogenanntes Streuwerk bildende Streuscheibe 7, unabhängig vom Zwischenbehälter 8, als zum großvolumigen Vorratsbehälter 1 gehörendes Aggregat dessen Chassis 1' zugeordnet ist und am Chassis und/oder am Vorratsbehälter 1 Einrichtungen (nicht besonders dargestellt, da ohne weiteres vorstellbar) zur Befestigung des Zwischenbehälters 8 angeordnet sind, und zum Anderen dahingehend, daß die mindestens eine mit ihrem Antrieb ein sogenanntes Streuwerk bildende Streuscheibe 7 zusammen mit dem Zwischenbehälter 8 als an das Chassis 1' des großvolumigen Vorratsbehälters 1 ansetzbare Baueinheit ausgebildet ist, was bevorzugt wird, da hierbei die Streuteller von vornherein bezüglich ihrer Dimensionierung besser an die der Auslaßöffnungen 9 angepaßt sind.

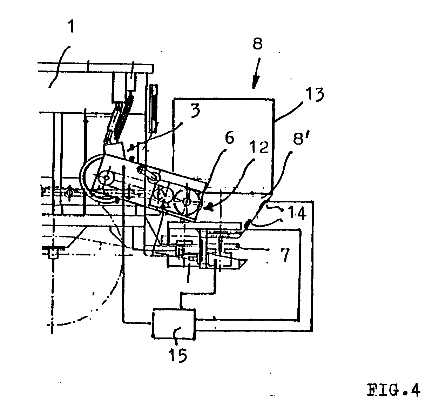

Bezüglich der zusätzlichen Ausstattung des Zwischenbehälters 8 bzw. von dessen trichterförmigen Teil 8' mit Sensoren wird auf Fig.4 verwiesen, wonach in diesem trichterförmigen Unterteil 8' Füllstandssensoren 14 angeordnet und diese mit der Steuerung 15 des Antriebes 3 des Endlosförderers 2 verschaltet sind. Mit diesen Sensoren 14 kann bspw. der unterbrechungslose Austrag des Streugutes überwacht werden.

## Patentansprüche

1. Streuvorrichtung für die Ausbringung von fein- bis grobkörnigen Mineraldünger, bestehend aus einem auf einem fahrbaren Chassis (1') angeordneten, trogartigen Vorratsbehälter (1), dessen Boden aus einem mit Antrieb (3) versehenen Endlosförderer (2) gebildet ist, der die untere Begrenzung einer rückwandseitigen, mit Schieber regulierbare Öffnung des Vorratsbehälters (1) bildet und diese überragt, und unter dessen Ende (6) mindestens eine um eine vertikale Achse drehbare Streuscheibe (7) angeordnet ist,
**dadurch gekennzeichnet,**
**daß** zwischen dem Ende (6) des Endlosförderers (2) und der mindestens einem Streuscheibe (7) ein in Bezug auf den Vorratsbehälter (1) volumenkleinerer Zwischenbehälter (8) mit mindestens einer regulierbaren Auslaßöffnung (9) in seinem Boden angeordnet ist, daß der Zwischenbehälter (8) zuförderseitig mit einer Ausnehmung (12) für den überlappenden Eingriff des Endes (6) des Endlosförderers (2) und über der Ausnehmung (12) nach oben mit einer Verlängerung (13) versehen ist und daß mindestens die beiden Flankenbereiche (10) des Endlosförderers (2) im Übergangsbereich (5) vom Vorratsbehälter (1) zum Zwischenbehälter (8) mit Überlaufblenden (11) versehen sind.

2. Streuvorrichtung nach Anspruch 1,
**dadurch gekennzeichnet,**
**daß** die beiden seitlichen Überlaufblenden (11) die Seitenwände eines den Übergangsbereich (5) zwischen Vorratsbehälter (1) und Zwischenbehälter (8) überdeckenden Tunnels (12) bilden.

3. Streuvorrichtung nach Anspruch 1 oder 2,
**dadurch gekennzeichnet,**
**daß** die Überlaufblenden (11) oder der den Übergangsbereich (5) überdeckende Tunnel (12) mit dem Vorratsbehälter (1) und/oder dem Zwischenbehälter (8) elastisch verbunden sind.

4. Streuvorrichtung nach einem der Ansprüche 1 bis 3,
**dadurchg gekennzeichnet,**
daß die mindestens eine mit ihrem Antrieb ein sogenanntes Streuwerk bildende Streuscheibe (7), unabhängig vom Zwischenbehälter (8), als zum großvolumigen Vorratsbehälter (1) gehörendes Aggregat dessen Chassis (1') zugeordnet ist und am Chassis und/oder am Vorratsbehälter (1) Einrichtungen zur Befestigung des Trichters (8) angeordnet sind.

5. Streuvorrichtung nach einem der Ansprüche 1 bis 3,
**dadurch gekennzeichnet,**
**daß** die mindestens eine mit ihrem Antrieb ein sogenanntes Streuwerk bildende Streuscheibe (7) zusammen mit dem Zwischenbehälter (8) als an das Chassis (1') des großvolumigen Vorratsbehälters (1) ansetzbare Baueinheit ausgebildet ist.

6. Streuvorrichtung nach einem der Ansprüche 1 bis 5,
**dadurch gekennzeichnet,**
**daß** im trichterförmigen Unterteil (8') des Zwischenbehälters (8) Füllstandssensoren (14) angeordnet und diese mit der Steuerung (15) des Antriebes (3) des Endlosförderers (2) verschaltet sind.
